# EUROPÄISCHE PATENTSCHRIFT

(11) **EP 2 640 616 B1**
(45) Veröffentlichungstag und Bekanntmachung des Hinweises auf die Patenterteilung: **26.08.2015**
(21) Anmeldenummer: 11764485.6
(22) Anmeldetag: 30.09.2011
(51) Int. Cl.: B60T 8/172, B60T 8/1769

(54) **FAHRZEUG, INSBESONDERE HYBRIDFAHRZEUG**
VEHICLE, IN PARTICULAR A HYBRID VEHICLE
VÉHICULE, EN PARTICULIER VÉHICULE HYBRIDE

(30) Priorität: 19.11.2010 DE 102010051979
(43) Veröffentlichungstag der Anmeldung: 25.09.2013
(73) Patentinhaber: Audi AG, 85045 Ingolstadt (DE)
(72) Erfinder: THEEL, Thomas, 86697 Oberhausen (DE)
(86) Internationale Anmeldenummer: PCT/EP2011/004884
(87) Internationale Veröffentlichungsnummer: WO 2012/065662

(56) Entgegenhaltungen:
- DE-A1- 10 044 821
- DE-A1- 10 141 548
- DE-A1- 19 920 617
- DE-A1-102008 017 478
- DE-C1- 10 163 208

## Beschreibung

Die Erfindung betrifft ein Fahrzeug, insbesondere Hybridfahrzeug, nach dem Oberbegriff des Patentanspruches 1.

Bei allradgetriebenen Kraftfahrzeugen wird zwischen einem zuschaltbaren Allradantrieb und einem permanenten Allradantrieb unterschieden. Beim zuschaltbaren Allradantrieb kann bei Bedarf die Fahrzeugvorderachse beziehungsweise -hinterachse dem Antriebsstrang zugeschaltet werden. Demgegenüber ist der permanente Allradantrieb mit einem starren Antriebsstrang versehen. Bei dem starren Antriebsstrang wird das im Antriebsaggregat erzeugte Antriebsmoment über ein mechanisches Zwischenachsdifferenzial, insbesondere ein Torsendifferenzial oder ein Kronenraddifferenzial, im Wesentlichen gleichmäßig zur Vorderachse und zur Hinterachse verteilt. In diesem Fall können einzelne Fahrzeugräder nicht aus dem Antriebsstrang entkoppelt werden. Drehzahldifferenzen zwischen den Fahrzeugachsen werden hier über das Zwischenachsdifferenzial ausgeglichen.

Derartige Fahrzeuge können ein Fahrdynamikregelsystem aufweisen, bei dem durch gezieltes Abbremsen einzelner Fahrzeugräder dem Ausbrechen des Fahrzeuges entgegengewirkt werden kann. Aus der DE 198 43 221 A1 ist ein Fahrzeug mit einem solchen Fahrdynamikregelsystem bekannt, bei dem die von Radsensoren erfassten Ist-Raddrehzahlen als Eingangsparameter verwendet werden. In Abhängigkeit von den erfassten Ist-Raddrehzahlen, der Querbeschleunigung, der Gierrate und/oder des Lenkwinkels nimmt das Fahrdynamikregelsystem automatische Bremseingriffe an den Fahrzeugbremsen der Vorder- und Hinterräder vor. Zudem ist ein Bremskraftverstärker vorgesehen, mit dem in bekannter Weise die zum Erreichen einer fahrerseitig gewünschten Bremskraftwirkung erforderliche Betätigungskraft am Bremspedal reduziert werden kann. Der Bremskraftverstärker gemäß der DE 198 43 221 A1 ist ein sogenannter aktiver Unterdruckbremskraftverstärker, der sowohl elektrisch über das Regelsystem als auch mechanisch über ein Bremspedal betätigbar ist.

Insbesondere bei Fahrzeugen mit teilweisem oder vollständigem Elektroantrieb kann in einem Rekuperationsbetrieb ein Rekuperationsmoment, das heißt ein Schleppmoment beziehungsweise ein negatives Antriebsmoment, über den Antriebsstrang auf die Fahrzeugräder übertragen werden, wodurch eine Fahrzeugverzögerung erfolgen kann. Dieses Schleppmoment kann insbesondere bei einem Straßenbelag mit Niedrigreibwert (das heißt Eis) zu einem hohen Rad-Bremsschlupf führen.

Im Falle eines permanenten Allradantriebes mit in etwa gleichmäßiger Momentenverteilung wird dieser Bremsschlupf in etwa gleichmäßig auf alle vier Räder verteilt, so dass sowohl die Vorderräder als auch die Hinterräder aufgrund des in der Elektromaschine erzeugten Bremsschlupfes gleichmäßig langsamer drehen. Eine Fahrzeuggeschwindigkeitsermittlung auf der Grundlage dieser erfassten Ist-Raddrehzahlen führt daher zu einer zu niedrigen Fahrzeug-Referenzgeschwindigkeit, die zwar der Fahrdynamikregelung zugrunde gelegt wird, jedoch die tatsächliche Fahrzeuggeschwindigkeit falsch wiedergibt. Das Fahrdynamikregelsystem erkennt diesen Zustand als Teilbremsung auf höherem Reibwert als tatsächlich vorhanden. Die tatsächliche Fahrzeuggeschwindigkeit ist dabei größer als es das Fahrdynamikregelsystem aus den Radsignalen berechnet. In diesem Falle spricht man von einer sogenannten "abgeseilten Fahrzeugreferenz".

Die oben wiedergegebene Problematik ist speziell bei permanentem Allradantrieb von Relevanz. Im Unterschied dazu können nämlich zuschaltbare Allradantriebe die Vorderachse oder die Hinterachse vom Antriebsstrang abkoppeln und dadurch aussagekräftige Ist-Raddrehzahlen ermitteln, die mit der tatsächlichen Fahrzeuggeschwindigkeit korrelieren. Eine solche Abkoppelung vom Antriebsstrang ist jedoch bei einem permanenten Allradantrieb nicht möglich.

Aus der DE 199 20 617 A1 ist ein gattungsgemäßes Fahrzeug bekannt, bei dem die Motorbremswirkung während einer Gefällefahrt durch einen aktiven, elektronisch gesteuerten Bremseingriff an mindestens einem Rad aufrechterhalten wird.

Der elektronischen Steuereinrichtung ist eine Prüfeinheit zugeordnet, die im Schleppbetrieb des Fahrzeuges, das heißt bei einer Fahrzeugbremsung über den Antriebsstrang, automatisch eine Plausibilitätsprüfung der von den Raddrehzahlsensoren erfassten Ist-Raddrehzahlen vornimmt. Die Durchführung der erfindungsgemäßen Plausibilitätsprüfung ist insbesondere auf allradgetriebene Hybridfahrzeuge mit relativ starrer Momentenverteilung, großen Differenzialsperrwerten sowie nicht entkoppelbaren Fahrzeugachsen und Fahrzeugräder anwendbar, jedoch ggf. auch bei nur einer im Antriebsstrang geschalteten Fahrzeugachse anwendbar. In einer einfachen Ausführung mit nur einer angetriebenen Fahrzeugachse kann die Prüfeinheit zur Durchführung der Plausibilitätsprüfung die Fahrzeugbremse eines der Fahrzeugräder aktivieren und/oder eine zuschaltbare Achse öffnen. Anhand des sich daraus ergebenden Drehzahlverhaltens des Fahrzeugrades mit den nicht aktivierten Fahrzeugbremsen erkennt die Prüfeinheit, ob die erfassten Ist-Raddrehzahlen mit der tatsächlichen Fahrzeuggeschwindigkeit korrelieren oder nicht. Die Prüfeinheit ist in Signalverbindung mit dem Bremskraftverstärker des Fahrzeuges. Der Bremskraftverstärker wird bei der Plausibilitätsprüfung zur Aktivierung der Fahrzeugbremse von der Prüfeinheit angesteuert.

Die Aufgabe der Erfindung besteht darin, ein Fahrzeug bereitzustellen, bei dem während eines Schleppbetriebes in einfacher Weise die von Raddrehzahlsensoren erfassten Ist-Raddrehzahlen auf Plausibilität geprüft werden können.

Die Aufgabe ist durch die Merkmale des Patentanspruches 1 gelöst. Bevorzugte Weiterbildungen der Erfindung sind in den Unteransprüchen offenbart.

Die erfindungsgemäße Prüfeinheit ist als ein Programmbaustein im ESP-Steuergerät zu verstehen. Beispielhaft kann die Prüfeinheit als ein Software-Algorithmus im ESP-Steuergerät realisiert sein.

Der Bremskraftverstärker sowie eine der elektronischen Steuereinrichtung zugeordnete ESP-Pumpe ist zusammen mit den Fahrzeugbremsen sowie weiteren hier nicht näher beschriebenen, da geläufigen Schaltelementen in einen hydraulischen Bremskreis des Fahrzeuges geschaltet. Der Bremskraftverstärker und auch die oben genannte ESP-Pumpe bilden hierbei Stellglieder, bei deren Betätigung ein Bremsdruck in der von der Steuereinrichtung jeweils ausgewählten Fahrzeugbremse aufgebaut werden kann.

Erfindungsgemäß kann der Bremskraftverstärker als sogenannter aktiver Booster sowohl mechanisch über das Bremspedal betätigt werden als auch elektrisch von der Prüfeinheit angesteuert werden. Der Einsatz des Bremskraftverstärkers zur Plausibilitätsprüfung ist im Vergleich zum Einsatz der ESP-Pumpe dahingehend vorteilhaft, als es zu keiner Geräuschbildung durch einen ESP-Pumpenanlauf kommt, es je nach Bauteilauslegung kaum Bremspedalrückwirkungen beim Einbremsen des Fahrers in diesen Vorgang gibt und definierte sowie genaue Druckstellungen vorhanden sind. Wesentlich für die Erfindung ist es daher, dass die Plausibilitätsprüfung durch Ansteuerung vom ESP über den aktiven Booster erfolgt.

Vor diesem Hintergrund wird erfindungsgemäß die ESP-Pumpe ausschließlich im Fahrbetrieb zur Fahrdynamikregelung von der elektronischen Steuereinrichtung angesteuert, und zwar insbesondere in Abhängigkeit der erfassten Ist-Raddrehzahlen, Gierrate, Querbeschleunigung und/oder des Lenkwinkels, auf deren Grundlage durch ein gezieltes Abbremsen einzelner Fahrzeugräder dem Ausbrechen des Fahrzeuges entgegengewirkt werden kann. Zur Durchführung einer betriebssicheren Fahrdynamikregelung ist es daher besonders von Relevanz, dass die als Grundlage für die Fahrdynamikregelung dienenden Ist-Raddrehzahlen auf Plausibilität geprüft sind.

Während der Fahrdynamikregelung erfolgt der Bremsdruckaufbau in den hydraulisch arbeitenden Fahrzeugbremsen durch Ansteuerung der oben genannten ESP-Pumpe, während demgegenüber bei der Plausibilitätsprüfung die ESP-Pumpe stillgelegt bleibt und lediglich der Bremskraftverstärker als Stellglied zum Bremsdruckaufbau an der bzw. den ausgewählten Fahrzeugbremsen eingesetzt wird.

Sofern bei der Plausibilitätsprüfung die Raddrehzahl des Fahrzeuges mit nicht aktivierter Fahrzeugbremse in etwa gleich bleibt, liegt wenig bzw. kein Bremsschlupf zwischen den angetriebenen Fahrzeugrädern und dem Fahrbelag vor. In diesem Fall erkennt die Prüfeinheit, dass im Schleppbetrieb die erfassten Ist-Raddrehzahlen mit der tatsächlichen Fahrzeuggeschwindigkeit korrelieren.

Wenn im Gegensatz dazu während der Plausibilitätsprüfung die Raddrehzahl des Fahrzeugrads mit deaktivierter Fahrzeugbremse ansteigt bzw. fällt, so erkennt die Prüfeinheit im Schleppbetrieb einen Bremsschlupf zwischen den Fahrzeugrädern und dem Fahrbelag. In diesem Fall drehen sich also die Fahrzeugräder im Verhältnis zur tatsächlichen Fahrzeuggeschwindigkeit zu langsam bzw. zu schnell, das heißt die im Schleppbetrieb vorhandene Bremsenergie kann nicht zu 100% auf den Fahrbelag abgesetzt werden, so dass es zu einem Haftabriss der Fahrzeugräder kommt.

Sofern von der Prüfeinheit ein oben beschriebener Schlupf erkannt ist, kann die elektronische Steuereinrichtung Maßnahmen zur Reduzierung des Bremsschlupfes ergreifen. Bei Vorliegen des Bremsschlupfes kann beispielhaft die elektronische Steuereinrichtung ein im Schleppbetrieb maximal vom Antriebsaggregat absetzbares Schleppmoment reduzieren.

Im Fall eines Hybridfahrzeuges kann das Antriebsaggregat eine Brennkraftmaschine und eine Elektromaschine aufweisen. Während der Rekuperation erzeugt die Elektromaschine ein Rekuperationsmoment, das über den Antriebsstrang als Bremsmoment auf die angetriebenen Fahrzeugräder beaufschlagt wird. Sofern die Prüfeinheit während des Schleppbetriebs einen Bremsschlupf erkennt, kann die elektronische Steuereinrichtung als Maßnahme zur Reduzierung des Bremsschlupfes die Leistungselektronik der Elektromaschine ansteuern. Dadurch kann ein oberer Grenzwert für das maximal absetzbare Rekuperationsmoment so reduziert bzw. errechnet werden, dass der Bremsschlupf im Schleppbetrieb des Fahrzeuges verhindert ist. Dies gilt auch für reine E-Fahrzeuge unterschiedlichster Antriebskonfigurationen.

Wie bereits oben erwähnt, ist die vorliegende erfindungsgemäße Plausibilitätsprüfung insbesondere bei einem permanenten Allradantrieb mit einem mechanischen Zwischenachsdifferenzial/Mittendifferenzial von Relevanz, insbesondere bei einem Torsendifferenzial oder Kronenraddifferenzials, bei dem die vier Fahrzeugräder nicht vom starren Antriebsstrang entkoppelbar sind und bei dem große Differentialsperrwerte vorliegen. Raddrehzahldifferenzen werden daher über das Mittendifferenzial ausgeglichen. Im Unterschied zu einem Einzelachsantrieb werden bei einem solchen permanenten Allradantrieb die vier Fahrzeugräder in etwa gleichmäßig mit dem Schleppmoment beaufschlagt. Da bei einem permanenten Allradantrieb eine Entkoppelung von Fahrzeugrädern nicht möglich ist, ergibt sich im Schleppbetrieb bei allen vier Rädern ein in etwa gleichmäßiger Bremsschlupf für den Fall, dass die Bremsenergie nicht vollständig auf den Fahrbelag abgesetzt werden kann. Die auf der Grundlage der Ist-Raddrehzahlen ermittelte Fahrzeug-Referenzgeschwindigkeit ist daher aufgrund des nicht erkannten Bremsschlupfes niedriger als die tatsächliche Fahrzeuggeschwindigkeit.

Im Falle des oben erwähnten permanenten Allradantriebs kann die Plausibilitätsprüfung durch eine sogenannte Vertrimmung der vier Fahrzeugräder erfolgen, bei der die Fahrzeugbremsen von einzelnen oder diagonal gegenüberliegenden Fahrzeugrädern jeweils aktiviert werden, während die verbleibenden anderen Fahrzeugräder mit deaktivierter Fahrzeugbremse, das heißt ungebremst verbleiben. Dadurch bricht das Zwischenachsdifferenzial auf, wodurch sich die nunmehr gebremsten Fahrzeugräder noch stärker im Bremsschlupf befinden, während die beiden ungebremsten Fahrzeugräder gegebenenfalls mit erhöhter Drehzahl laufen. In diesem Fall erkennt die Prüfeinheit, dass im Schleppbetrieb ein Bremsschlupf aufgetreten ist, der die der Fahrdynamikregelung zugrundegelegten Referenz-Fahrzeuggeschwindigkeit verfälscht.

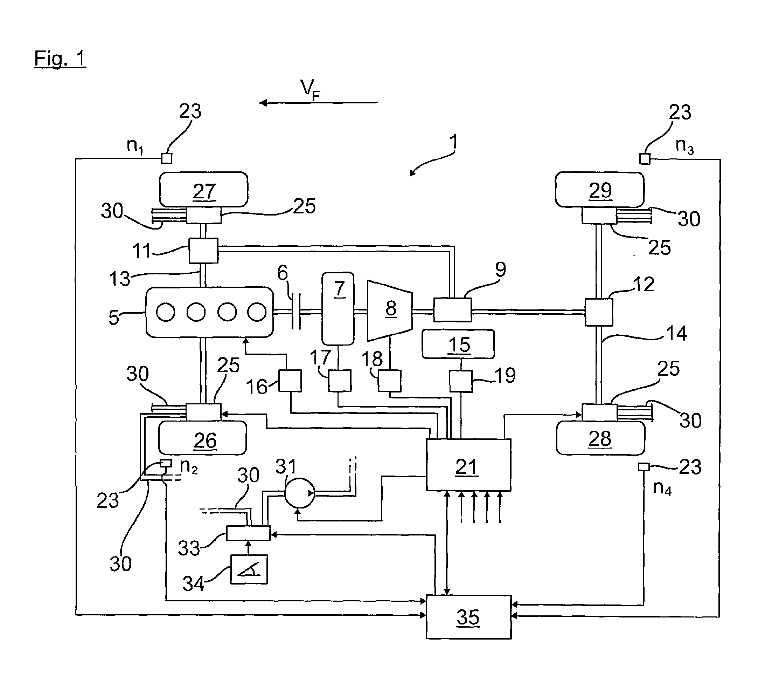

Nachfolgend ist anhand der Fig. 1 ein Ausführungsbeispiel der Erfindung beschrieben.

In der Fig. 1 ist ein Fahrzeug mit einem Allradantriebssystem 1 gezeigt. Der Allradantrieb des Fahrzeuges weist als Antriebsaggregate eine Brennkraftmaschine 5 auf, zusammen mit einer Trennkupplung 6, einer Elektromaschine 7 und einem Geschwindigkeitswechselgetriebe 8 in Reihe in einem Antriebsstrang geschaltet sind. Die Getriebeausgangswelle ist mit einem Zwischenachsdifferenzial 9 gekoppelt, das jeweils mit einem Vorderachsdifferenzial 11 und einem Hinterachsdifferenzial 12 trieblich verbunden ist. Das Zwischenachsdifferenzial 9 ist vorliegend ein Torsendifferenzial, bei dem die Vorder- und Hinterachsen 13, 14 nicht entkoppelbar sind. Insofern ist im Ausführungsbeispiel der Fig. 1 ein starrer Antriebsstrang für einen permanenten Allradantrieb gezeigt. Es erfolgt daher eine relativ starre Momentenverteilung mit vergleichsweise großen Differentialsperrwerten mit nicht entkoppelbaren Fahrzeugachsen 13, 14 sowie -räder 26 bis 29.

Den beiden Antriebsaggregaten 5, 7 sowie dem Getriebe 8 und der Fahrbatterie 15 zur Stromversorgung der Elektromaschine 7 sind jeweils Steuergeräte 16 bis 19 zugeordnet. Die Steuergeräte 16 bis 19 sind in Abhängigkeit von unterschiedlichen Eingangsparametern, etwa einer fahrerseitigen Vorgabe oder anderen Eingangsparametern mittels einer elektronischen Steuereinrichtung 21 ansteuerbar. In der elektronischen Steuereinrichtung 21 ist zudem ein Fahrdynamikregelsystem integriert, das zur Fahrdynamikregelung in Abhängigkeit von den, mittels Raddrehzahlsensoren 23 erfassten Raddrehzahlen n₁ bis n₄ selbsttätig Bremseingriffe an den Fahrzeugbremsen 25 der Vorderräder 26, 27 und der Hinterräder 28, 29 durchführt. Mittels der von den Raddrehzahlsensoren 23 erfassten Raddrehzahlen n₁ bis n₄ ermittelt die Steuereinrichtung 21 eine Fahrzeug-Referenzgeschwindigkeit, die die tatsächliche Fahrzeuggeschwindigkeit v_{F} wiedergeben soll.

Wie an sich bekannt ist, sind die Fahrzeugbremsen 25 der Fahrzeugräder 26 bis 29 in einem hydraulischen Bremskreis 30 geschaltet, der in der Fig. 1 nur grob angedeutet ist. So sind in dem hydraulischen Bremskreis 30, neben nicht dargestellten, von der Steuereinrichtung 21 ansteuerbaren Schaltkomponenten eine ESP-Pumpe 31 und ein an sich bekannter Bremskraftverstärkter 33 integriert. Der Bremskraftverstärker 33 kann in an sich bekannter Weise durch ein Bremspedal 34 mechanisch betätigt werden oder alternativ über eine später beschriebene Prüfeinheit 35 elektrisch angesteuert werden.

Zur Durchführung einer Fahrdynamikregelung werden die Fahrzeugbremsen 25 durch Aktivierung der ESP-Pumpe 31 sowie durch entsprechende Betätigung der im Hydraulikkreislauf 30 angeordneten Schaltkomponenten angesteuert so, dass im Fahrbetrieb ein Ausbrechen des Fahrzeugs verhindert ist. Der Bremskraftverstärker 33 bleibt hierbei außer Betrieb, so dass der Bremsdruckaufbau alleine durch die ESP-Pumpe 31 erfolgt. Bei großen Fahrzeug-Instabilitäten wird der aktive Booster aktiviert, um Flüssigkeitsvolumen zu verschieben und damit den Druckaufbau durch die ESP-Pumpe zu unterstützen.

Wie bereits oben erwähnt, ist erfindungsgemäß die Prüfeinheit 35 vorgesehen, die in einem Schleppbetrieb eine Plausibilitätsprüfung der von der Radsensoren 24 erfassten Ist-Raddrehzahlen n₁ bis n₄ durchführt. Eine solche Plausibilitätsprüfung ist aus folgendem Grunde erforderlich:

Die in den Antriebsstrang des Fahrzeugs geschaltete Elektromaschine 7 kann bei einer Rekuperation die Fahrbatterie 15 wiederaufladen. Das hierbei von der Elektromaschine 7 erzeugte Rekuperationsmoment wird als Schleppmoment oder als negatives Antriebsmoment auf die Fahrzeugräder 26 bis 29 übertragen, wodurch eine Fahrzeugbremsung über den Antriebsstrang erfolgen kann. Bei einem übergroßen Schleppmoment und/oder bei einem Straßenbelag mit Niedrigreibwert besteht hierbei das Risiko, dass die Bremsenergie nicht vollständig auf die Straße abgesetzt wird, wodurch sich in etwa in gleichmäßiger Momentenverteilung ein Bremsschlupf an allen vier Rädern 26 bis 29 einstellt. Dies würde ohne die erfindungsgemäße Plausibilitätsprüfung zu einer nicht aussagekräftigen Fahrzeugreferenzgeschwindigkeit führen, die zu unkontrollierten Fahrzeug-Reaktionen führen können.

Bei der im Schleppbetrieb durchgeführten Plausibilitätsprüfung werden jeweils die Fahrzeugbremsen 25 diagonal gegenüberliegender Fahrzeugräder aktiviert. Beispielhaft wird im folgenden gemäß der Fig. 1 die Fahrzeugbremse 25 des rechten Vorderrads 27 sowie die Fahrzeugbremse 25 des linken Hinterrads 28 betätigt. Zum Bremsdruckaufbau steuert die Prüfeinheit 35 nicht die ESP-Pumpe 31, sondern den Bremskraftverstärker 33 sowie die ebenfalls im Bremskreis 30 befindlichen Schaltkomponenten (sind im ESP integriert) an, um an den ausgewählten Fahrzeugbremsen 25 den Bremsdruck über einen definierten Druckgradienten und/oder verschiedene definierte Druckniveaus zu erhöhen. Dadurch wird der Bremsschlupf am rechten Vorderrad 27 und am linken Hinterrad 28 erhöht, während die beiden anderen Fahrzeugräder 26, 29 ungebremst verbleiben. Anhand der sich an den ungebremsten Fahrzeugrändern 26, 29 einstellenden Drehzahlverhältnisse bzw. -änderungen erkennt die Prüfeinheit 35, ob während des Schleppbetriebes ein Bremsschlupf vorliegt oder nicht. Sofern nämlich nach obiger Bremsbeaufschlagung der Fahrzeugräder 27, 28 die Raddrehzahlen n₂ und n₃ der jeweils gegenüberliegenden, ungebremsten Fahrzeugräder 26, 29 ansteigen, stellt die Prüfeinheit 35 ein implausibles Radmuster fest, bei dem die vier Fahrzeugräder 26 bis 29 im Verhältnis zur tatsächlichen Fahrzeuggeschwindigkeit v_{F} zu langsam drehen.

Das Ergebnis der Plausibilitätsprüfung wird von der Prüfeinheit 35 zur elektronischen Steuereinrichtung 21 übermittelt, die bei Vorliegen eines Bremsschlupfes entsprechende Maßnahmen einleitet. Beispielhaft kann die Steuereinrichtung 21 die Leistungselektronik 17 der Elektromaschine 7 ansteuern, um ein maximal zulässiges Rekuperationsmoment zu reduzieren. Beispielhaft kann das Rekuperationsmoment etwa von 200 Nm auf 20 Nm reduziert werden. Durch derartige Maßnahmen reduziert sich die auf die Fahrzeugräder 26 bis 29 abzusetzende Bremsenergie, wodurch sich folgerichtig auch der Bremsschlupf reduziert. Durch Reduzierung des Rekuperationsmoments wird automatisch die Raddrehzahl der Fahrzeugräder 26 bis 29 erhöht. Die Räder laufen wiederum im stabilen Schlupfbereich. Dadurch gleicht sich die auf der Grundlage der erfassten Ist-Drehzahlen n₁ bis n₄ ermittelte Referenz-Fahrzeuggeschwindigkeit der tatsächlichen Fahrzeuggeschwindigkeit v_{F} an.

## Patentansprüche

1. Fahrzeug mit zumindest einem Antriebsaggregat (5, 7), mit dem zumindest die Fahrzeugräder (26 bis 29) einer Fahrzeugachse (13, 14) antreibbar sind und mit dem in einem Schleppbetrieb eine Fahrzeugbremsung über den Antriebsstrang erfolgt, mit einer elektronischen Steuereinrichtung (21), die als Eingangsparameter die Ist-Raddrehzahlen (n₁ bis n₄) der Fahrzeugräder (26 bis 29) erfasst, und mit einem Bremskraftverstärker (33) zur Reduzierung der am Bremspedal (34) erforderlichen Betätigungskraft, wobei der elektronischen Steuereinrichtung (21) eine Prüfeinheit (35) zugeordnet ist, die im Schleppbetrieb eine Plausibilitätsprüfung der erfassten Ist-Raddrehzahlen (n₁ bis n₄) vornimmt, bei der die Prüfeinheit (35) eine Fahrzeugbremse (25) eines der Fahrzeugräder (27, 28) aktiviert und am Drehzahlverhalten des Fahrzeugrads (26, 29) mit nicht aktivierter Fahrzeugbremse (25) erkennt, ob die erfassten Ist-Raddrehzahlen (n₁ bis n₄) mit der tatsächlichen Fahrzeuggeschwindigkeit (v_{F}) korrelieren, und wobei die Prüfeinheit (35) in Signalverbindung mit dem Bremskraftverstärker (33) ist, der bei der Plausibiliätsprüfung zur Aktivierung der Fahrzeugbremse (25) von der Prüfeinheit (35) ansteuerbar ist, **dadurch gekennzeichnet, dass** in einem hydraulischen Bremskreis (30) der Fahrzeugbremsen (25) eine Stellpumpe (31) geschaltet ist, die während der Fahrdynamikregelung zum Bremsdruckaufbau der Fahrzeugbremsen (25) von der elektronischen Steuereinrichtung (21) ansteuerbar ist, jedoch während der im Schleppbetrieb durchgeführten Plausibilitätsprüfung stillgelegt bleibt.

2. Fahrzeug nach Anspruch 1, **dadurch gekennzeichnet, dass** die elektronische Steuereinrichtung (21) im Fahrbetrieb zur Fahrdynamikregelung, insbesondere in Abhängigkeit der erfassten Ist-Raddrehzahlen (n₁ bis n₄), die Fahrzeugbremsen (25) selbsttätig betätigt.

3. Fahrzeug nach Anspruch 1 oder 2, **dadurch gekennzeichnet, dass**, wenn während der Plausibilitätsprüfung die Raddrehzahl (n₂, n₃) des Fahrzeugrads (26, 29) mit nicht aktivierter Fahrzeugbremse (25) in etwa gleich bleibt, die Prüfeinheit (35) keinen Bremsschlupf zwischen den Fahrzeugrädern (26 bis 29) und dem Fahrbelag erfasst, so dass die Prüfeinheit (35) erkennt, dass die erfassten Ist-Raddrehzahlen (n₁ bis n₄) mit der tatsächlichen Fahrzeuggeschwindigkeit (v_{F}) korrelieren beziehungsweise übereinstimmen.

4. Fahrzeug nach einem der Ansprüche 1 bis 3, **dadurch gekennzeichnet, dass**, wenn während der Plausibilitätsprüfung die Raddrehzahl (n₂, n₃) des Fahrzeugrads (26, 29) mit der nicht aktivierten Fahrzeugbremse (25) ansteigt, die Prüfeinheit (35) einen Bremsschlupf zwischen den Fahrzeugrädern (26 bis 29) und dem Fahrbelag erfasst, so dass die Prüfeinheit (35) erkennt, dass die Fahrzeugräder (26 bis 29) im Verhältnis zur tatsächlichen Fahrzeuggeschwindigkeit (v_{F}) zu langsam drehen.

5. Fahrzeug nach Anspruch 4, **dadurch gekennzeichnet, dass** die elektronische Steuereinrichtung (21) bei Vorliegen eines Bremsschlupfes ein im Schleppbetrieb maximal vom Antriebsaggregat (5, 7) absetzbares Schleppmoment reduziert.

6. Fahrzeug nach einem der vorhergehenden Ansprüche, **dadurch gekennzeichnet, dass** das Antriebsaggregat eine Brennkraftmaschine (5) und/oder zumindest eine Elektromaschine (7) aufweist, die im Schleppbetrieb ein als Schleppmoment wirkendes Rekuperationsmoment erzeugt, wobei die elektronische Steuereinrichtung (21) durch Ansteuern der Leistungselektronik (17) einen Grenzwert für das maximal absetzbare Rekuperationsmoment einstellt.

7. Fahrzeug nach einem der vorhergehenden Ansprüche, **dadurch gekennzeichnet, dass** das Fahrzeug einen permanenten Allradantrieb mit einem mechanischen Zwischenachsdifferenzial (9), insbesondere ein Kronenrad- oder Torsendifferenzial, aufweist, das über Vorder- und Hinterachsdifferenziale (11, 12) auf die Vorder- und Hinterräder (26 bis 29) abtreibt und bei dem die Vorder- und Hinterräder (26 bis 29) nicht aus dem Antriebsstrang entkoppelbar sind, wobei insbesondere die Momentenverteilung auf die Vorder- und Hinterräder (26 bis 29) in etwa gleichmäßig erfolgt.

8. Fahrzeug nach Anspruch 7, **dadurch gekennzeichnet, dass** die Prüfeinheit (35) bei der Plausibilitätsprüfung eine Vertrimmung der Fahrzeugräder (26 bis 29) durchführt, bei der die Fahrzeugbremsen (25) diagonal gegenüberliegender Fahrzeugräder aktivierbar sind, das heißt das linke Vorderrad (26) und das rechte Hinterrad (29) beziehungsweise das rechte Vorderrad (27) und das linke Hinterrad (28), während die Prüfeinheit (35) das Drehzahlverhalten der verbleibenden Fahrzeugräder mit nicht aktivierter Fahrzeugbremse (25) prüft.

## Claims

1. Vehicle comprising at least one drive assembly (5, 7) by means of which at least the vehicle wheels (26 to 29) of a vehicle axle (13, 14) can be driven and by means of which vehicle braking occurs via the drive train in towing mode, comprising an electronic control device (21) which detects as an input parameter the actual wheel rotational speeds (n₁ to n₄) of the vehicle wheels (26 to 29), and comprising a brake booster (33) for reducing the operating force required at the brake pedal (34), a test unit (35) being associated with the electronic control device (21) and carrying out a plausibility check of the detected actual wheel rotational speeds (n₁ to n₄) in towing mode, in which the test unit (35) activates a vehicle brake (25) of one of the vehicle wheels (27, 28) and identifies, on the basis of the speed characteristics of the vehicle wheel (26, 29) when the vehicle brake (25) is not activated, whether the detected actual wheel rotational speeds (n₁ to n₄) correlate with the actual vehicle speed (v_{F}), and the test unit (35) being in a signal connection with the brake booster (33), which can be actuated by the test unit (35) during the plausibility check for activating the vehicle brake (25), **characterised in that** an adjustment pump (31) is connected in a hydraulic brake circuit (30) of the vehicle brakes (25), which pump can be actuated by the electronic control device (21) when the driving dynamics are being controlled for building up the brake pressure of the vehicle brakes (25), but remains out of operation during the plausibility check carried out in towing mode.

2. Vehicle according to claim 1, **characterised in that**, in driving mode, the electronic control device (21) automatically activates the vehicle brakes (25), in particular depending on the detected actual wheel rotational speeds (n₁ to n₄), in order to control the driving dynamics.

3. Vehicle according to either claim 1 or claim 2, **characterised in that** if, during the plausibility check, the wheel rotational speed (n₂, n₃) of the vehicle wheel (26, 29) remains approximately the same when the vehicle brake (25) is not activated, the test unit (35) does not detect any brake slip between the vehicle wheels (26 to 29) and the road surface, with the result that the test unit (35) identifies that the detected actual wheel rotational speeds (n₁ to n₄) correlate with or match the actual vehicle speed (v_{F}).

4. Vehicle according to any of claims 1 to 3, **characterised in that** if, during the plausibility check, the wheel rotational speed (n₂, n₃) of the vehicle wheel (26, 29) increases when the vehicle brake (25) is not activated, the test unit (35) detects a brake slip between the vehicle wheels (26 to 29) and the road surface, with the result that the test unit (35) identifies that the vehicle wheels (26 to 29) are turning too slowly relative to the actual vehicle speed (v_{F}).

5. Vehicle according to claim 4, **characterised in that**, in the event of a brake slip, the electronic control device (21) reduces a drag torque which is the maximum that the drive assembly (5, 7) can transmit in towing mode.

6. Vehicle according to any of the preceding claims, **characterised in that** the drive assembly comprises an internal combustion engine (5) and/or at least one electric machine (7) which produces, in towing mode, a regenerative torque which acts as the drag torque, the electronic control device (21) setting a limit value for the maximum regenerative torque which can be transmitted by actuating the power electronics (17).

7. Vehicle according to any of the preceding claims, **characterised in that** the vehicle has a permanent four wheel drive having a mechanical interaxle differential (9), in particular a crown gear or Torsen differential, which drives the front and rear wheels (26 to 29) via front and rear axle differentials (11, 12) and in which the front and rear wheels (26 to 29) cannot be decoupled from the drive train, the torques being distributed in particular approximately evenly across the front and rear wheels (26 to 29).

8. Vehicle according to claim 7, **characterised in that**, during the plausibility check, the test unit (35) trims the vehicle wheels (26 to 29), during which the vehicle brakes (25) of diagonally opposed vehicle wheels can be activated, i.e. the left-hand front wheel (26) and the right-hand rear wheel (29) or the right-hand front wheel (27) and the left-hand rear wheel (28), while the test unit (35) checks the speed characteristics of the remaining vehicle wheels, the vehicle brakes (25) of which are not activated.

## Revendications

1. Véhicule comprenant au moins un groupe moteur (5, 7), avec lequel au moins les roues (26 à 29) d'un essieu de véhicule (13, 14) peuvent être entraînées et avec lequel, en situation de trainée, il se produit un freinage du véhicule via les organes d'entraînement, comprenant un dispositif de commande électronique (21), qui comprend comme paramètres d'entrée les vitesses de rotation réelles (n₁, à n₄) des roues (26 à 29) du véhicule, et un amplificateur de force de freinage (33) pour réduire la force de commande nécessaire sur la pédale de frein (34), dans lequel il est affecté au dispositif de commande (21) une unité d'essai (35) qui effectue en situation de traînée un essai de plausibilité des vitesses de rotation réelles (n₁ à n₄) détectées des roues, dans lequel l'unité d'essai (35) active un frein (25) d'une des roues (27, 28) du véhicule et sur la base du comportement de la vitesse de rotation de la roue (26, 29) du véhicule avec le frein (25) non activé reconnaît si les vitesses de rotation réelles (n₁ à n₄) détectées des roues sont en corrélation avec la vitesse réelle (v_{F}) du véhicule, et dans lequel l'unité d'essai (35) est en liaison par signalisation avec l'amplificateur de force de freinage (33), qui peut être commandé par l'unité d'essai (35) lors de l'essai de plausibilité pour activer le frein (25) du véhicule, **caractérisé en ce qu'**une pompe de réglage (31) est montée dans un circuit de frein hydraulique (30) des freins (25) du véhicule, laquelle pompe peut être commandée par le dispositif de commande électronique (21) pendant la régulation dynamique de marche pour accumuler la pression sur les freins (25) du véhicule, mais reste inactivée au cours de l'essai de plausibilité effectué en situation de trainée.

2. Véhicule selon la revendication 1, **caractérisé en ce que** le dispositif de commande électronique (21) commande automatiquement les freins du véhicule en situation de marche pour réguler la dynamique de marche, en particulier en fonction des vitesses de rotation réelles (n₁ à n₄) détectées des roues.

3. Véhicule selon la revendication 1 ou la revendication 2, **caractérisé en ce que**, lorsque, au cours de l'essai de plausibilité, la vitesse de rotation (n₂, n₃) de la roue (26, 29) du véhicule reste plus ou moins la même avec un frein (25) du véhicule non activé, l'unité d'essai (35) ne détecte pas de glissement au freinage entre les roues (26 à 29) du véhicule et le revêtement de la chaussée si bien que l'unité d'essai (35) reconnait que les vitesses de rotation réelles (n₁ à n₄) des roues sont en corrélation, voire coïncident avec la vitesse réelle (v_{F}) du véhicule.

4. Véhicule selon l'une quelconque des revendications 1 à 3, **caractérisé en ce que**, lorsque, au cours de l'essai de plausibilité, la vitesse de rotation (n₂, n₃) de la roue de véhicule (26, 29) augmente avec le frein (25) du véhicule non activé, l'unité d'essai (35) détecte un glissement au freinage entre les roues (26 à 29) du véhicule et le revêtement de la chaussée si bien que l'unité d'essai reconnait que les roues (26. à 29) du véhicule tournent trop lentement par rapport à la vitesse réelle (v_{F}) du véhicule.

5. Véhicule selon la revendication 4, **caractérisé en ce que** le dispositif de commande électronique (21), lors de l'apparition d'un glissement au freinage, réduit un couple glissant qui peut être tiré au maximum du groupe moteur (5, 7) en situation de traînée.

6. Véhicule selon l'une quelconque des revendications précédentes, **caractérisé en ce que** le groupe moteur présente un moteur à combustion interne (5) et/ou au moins une machine électrique (7), qui produit, en situation de trainée, un couple de récupération opérant en couple glissant, dans lequel le dispositif de commande électronique (21) règle une valeur limite pour le couple de récupération qui peut être retiré au maximum par commande de l'électronique de puissance (17).

7. Véhicule selon l'une quelconque des revendications précédentes, **caractérisé en ce que** le véhicule présente un entraînement permanent de toutes les roues avec un différentiel mécanique entre essieux (9), en particulier un'différentiel à couronne dentée ou à développement, qui, via des différentiels d'essieux avant et arrière (11, 12), opèrent sur les roues avant et arrière (26 à 29) et dans lequel les roues avant et arrière (26 à 29) ne peuvent, se désaccoupler des organes d'entraînement, dans lequel, en particulier, la répartition des couples sur les roues avant et arrière (26 à 29) se fait plus ou moins uniformément.

8. Véhicule selon la revendication 7, **caractérisé en ce que** l'unité d'essai (35) réalise lors de l'essai de plausibilité un réglage fin des roues (26 à 29) du véhicule, dans lequel les freins (25) des roues du véhicule en regard mutuel en diagonale peuvent être activés, c'est-à-dire la roue avant gauche (26) et la roue arrière droite (29) ou la roue avant droite (27) et la roue arrière gauche (28), tandis que l'unité d'essai (35) teste le comportement en rotation des roues restantes du véhicule avec un frein non activé (25) de celui-ci.
